# EUROPEAN PATENT SPECIFICATION

(11) **EP 2 455 217 B1**
(45) Date of publication and mention of the grant of the patent: **17.05.2017**
(21) Application number: 11189504.1
(22) Date of filing: 17.11.2011
(51) Int. Cl.: B29D 30/50

(54) **Tire bead wrapping apparatus**
Umhüllungsvorrichtung für Reifenwülste
Dispositif de recouvrement de talons de pneumatiques

(30) Priority: 23.11.2010 KR 20100116972
(43) Date of publication of application: 23.05.2012
(73) Proprietor: Hankook Tire Co., Ltd., Gangnam-gu, Seoul 135-723 (KR)
(72) Inventor: Min Seung II, 302-761 Daejeon (KR)
(74) Representative: HGF Limited

(56) References cited:
- GB-A- 303 609
- JP-A- 62 236 729
- US-A- 1 935 239
- US-A- 3 718 523
- US-A1- 2009 294 024

## Description

### BACKGROUND OF THE INVENTION

### 1. Field of the invention

The present invention relates to a bead wrapping technology of surrounding a bead which is a component of a tire with a textile cord, and more particularly to a bead wrapping apparatus for automatically cutting and attaching an end of a textile cord after the textile cord is initially attached and processed during a bead wrapping process.

### 2. Description of the Prior Art

Among components of a tire, a bead plays an important role in supporting a coupling force between the tire and a rim, maintaining an air pressure in the tire air-tightly, and securing and safely adjusting a cushion of a side wall during a driving operation.

Generally, a bead includes a naked bead and a filler. The naked bead is obtained by winding several wires topped with rubber on a single-piece cylindrical former four to six times to have a rectangular shape. Here, a cross-section of the wound cylindrical shape is hexagonal, and it is very important to maintain the hexagonal shape in a post process.

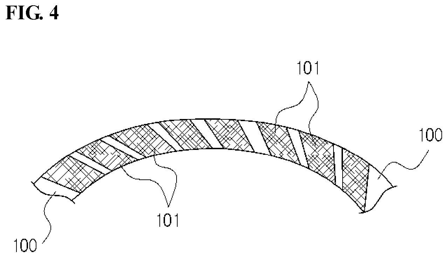

The bead manufactured through a bead process surrounds the textile cord topped with rubber to allow the bead to maintain the hexagonal shape and the stacked steel wire structure in the finished bead. Meanwhile, as illustrated in FIG. 4, a circumference of a bead 100 is spirally surrounded by a wrapping material 101, i.e. a textile cord to firmly maintain a shape of the bead 100 in the bead wrapping process.

However, according to the conventional bead wrapping apparatus, when a bead is wrapped with a textile cord, an end of the textile cord is manually cut and attached, causing an excessive labor load to an operator. Document US 3718523 - A discloses a wrapping machine designed to wrap the beads used in the manufacture of tires for motor vehicles.

### SUMMARY OF THE INVENTION

Accordingly, the present invention has been made to solve the above-mentioned problems occurring in the prior art, and an object of the present invention is to provide a bead wrapping apparatus according to claim 1, in which when a bead is wrapped, a textile cord is initially attached automatically and an end of the textile cord is cut and attached automatically, making it possible to significantly reduce a required amount of labor.

In order to accomplish this object, there is provided a bead wrapping apparatus including a winder on which a wrapping material is wound, a plurality of pulling rolls connected to a motor pulling the wrapping material wound on the winder, an advancer for guiding and moving in the looped condition the wrapping material pulled by the pulling rolls to a bead wrapping part. The bead wrapping part includes: a bead driving motor and a bead driving roll and a bead rotating roll to which a power of the bead driving motor is transferred; a bead rotating unit rotating the bead; a wrapping material attaching unit for surrounding the wrapping material on a circumference of the bead rotated by the bead rotating unit; and a driving unit for driving the wrapping material attaching unit.

A preferred embodiment of the bead wrapping apparatus is defined in claim 2.

### BRIEF DESCRIPTION OF THE DRAWINGS

The above and other objects, features and advantages of the present invention will be more apparent from the following detailed description taken in conjunction with the accompanying drawings, in which:

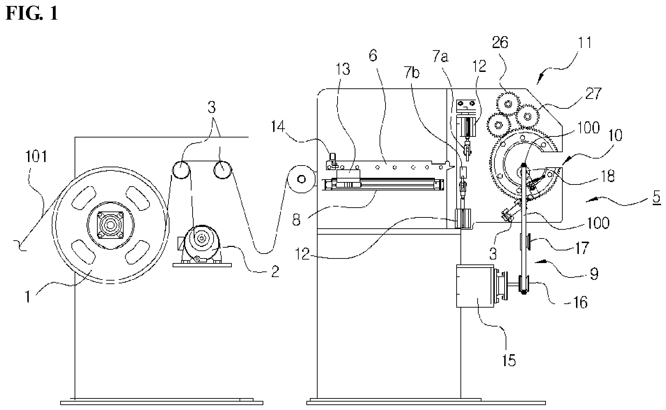

FIG. 1 is a view illustrating a bead wrapping apparatus according to the present invention;
FIG. 2 is an enlarged view illustrating a main part of FIG. 1;
FIGS. 3A to 3E are views sequentially illustrating operations of the present invention; and
FIG. 4 is a front view illustrating a general state where a bead is wrapped with a wrapping material.

### DETAILED DESCRIPTION OF THE PREFERRED EMBODIMENTS

Hereinafter, an exemplary embodiment of the present invention will be described with reference to the accompanying drawings.

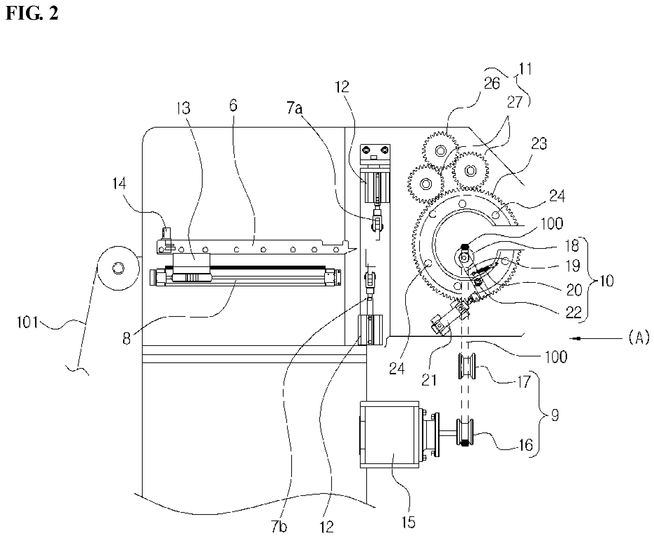

According to Fig, 1 and Fig. 2, the present invention provides a bead wrapping apparatus including a winder 1 on which a wrapping material 101 is wound, a plurality of pulling rolls 3 connected to a motor 2 pulling the wrapping material 101 wound on the winder 1, an advancer 6 for guiding and moving in the looped condition the wrapping material 101 pulled by the pulling rolls 3 to a bead wrapping part 5, the bead wrapping part 5 comprising: a bead driving motor 15 and a bead driving roll 16 and a bead rotating roll 17 to which a power of the bead driving motor 15 is transferred; a wrapping material attaching unit 10 for surrounding the wrapping material 101 on a circumference of the bead 100 rotated by the bead rotating unit 9; and a driving unit 11 for driving the wrapping material attaching unit 10.

According to the present invention, air cylinders 12 for operating the upper and lower knives 7a and 7b are respectively installed in the upper and lower knives 7a and 7b. As well known in the art, the advancer 6 includes a clamp 13 for clamping the wrapping material 101, the clamp cylinder for operating the clamp 13, and an air cylinder 8 for moving the clamp 13.

Meanwhile, the bead rotating unit 9 for rotating the bead 100 includes a bead driving motor 15, and a bead driving roll 16 and a bead rotating roll 17 to which a power of the bead driving motor 15 is transferred. The wrapping material attaching unit 10 includes a press roll 18 for attaching the wrapping material 101 to a circumference of the bead 100, a rotating bar 19 to which the press roll 18 is mounted, a spring 20 for applying a tensional force to the rotating bar 19, an air cylinder 21 for rotating the rotating bar 19, a wrapping gear 23 to which the rotating bar 19 is mounted by means of a hinge shaft 22, and a plurality of storing rolls 24 mounted to a circumferential surface of the wrapping gear 23 at an equal angular interval.

The driving unit 11 includes a driving gear 26 driven by a motor, and driven gears 27 one side of each of which is engaged with the driving gear 26 and another side of each of which is engaged with a wrapping gear 23.

According to the present invention, the wrapping material 101 is divided to have a predetermined width, is wound on the winder 1, and is supplied by the pulling rolls 3. The pulling rolls 3 pull and release the wrapping material 101 of the winder 1 to supply the wrapping material in the looped condition, and the wrapping material 101 of the looped condition is supplied to the clamp 13 of the advancer 6. The clamp 13 is reciprocated forward and rearward by the air cylinder 8.

The bead 100 is mounted to the bead rotating unit 19 to be rotated by the bead driving roll 16 and the bead rotating roll 17, and the wrapping material 101 supplied from the advancer while the bead 100 is rotating is rotated by the wrapping material attaching unit 10 to be wrapped on a circumference of the bead 100.

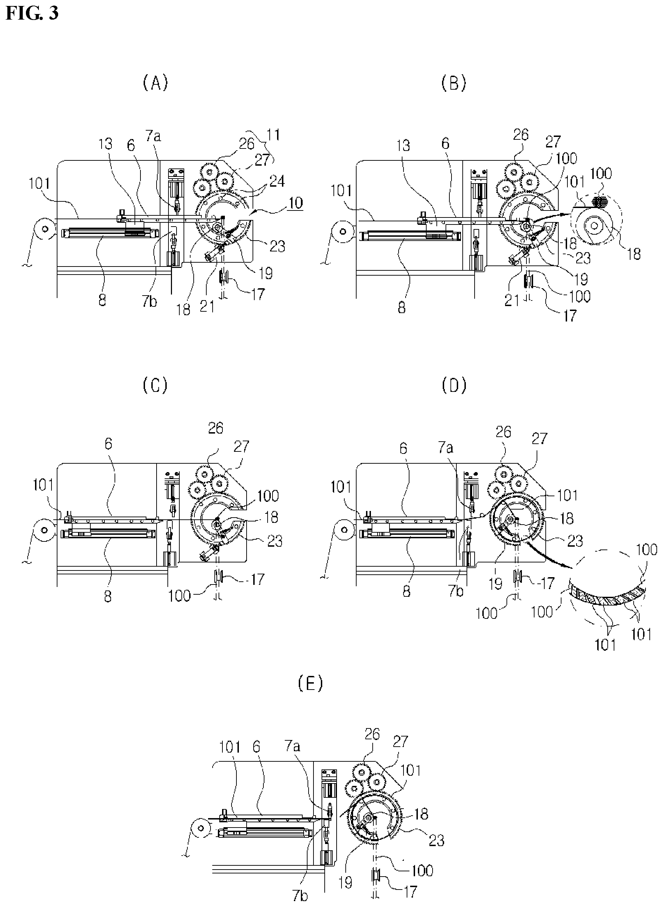

In more detail, as illustrated in FIG. 3A, the clamp 13 of the advancer 6 clamps the wrapping material 101 and is moved by the air cylinder 8 from a state of FIG. 2 to a state of FIG. 3A.

Then, another air cylinder 21 moves forward and rotates the rotating bar 19 to the left within the wrapping gear 23 by means of a hinge shaft 22 to maintain an opened state of a press roll 18, in which case the spring 20 is prolonged. The wrapping material 101 is located on a lower surface of the bead 100.

Subsequently, as illustrated in FIG. 3B, if the air cylinder 21 is moved rearward, the press roll 18 returns to an original position by a restoring force of the spring 20, and the wrapping material 101 is attached to the bead 100 as illustrated in the drawing.

As illustrated in FIG. 3C, if the advancer 6 is moved rearward by the air cylinder 8, a driving gear 26 connected to the motor and driven gears 27 are rotated to rotate the wrapping gear 23.

Thereafter, as illustrated in FIG. 3D, if the wrapping gear 23 is rotated by a predetermined number of rotations, the wrapping material 101 is stacked on an outer race of a storing roll 24. Then, as the bead 100 is rotated in a direction perpendicular to the wrapping gear 23, the press roll 18 is rotated to spirally surround the bead with the wrapping material 101. (See FIG. 3D).

Finally, as illustrated in FIG. 3E, after the wrapping material 101 whose quantity corresponding to one bead 100 to be wrapped is stacked, the upper and lower knives 7a and 7b are operated to cut the wrapping material 101 supplied from the advance 6, in which case the wrapping gear 23 is contiguously rotated to attach the wrapping material 101 to the bead 100 and finish the bead wrapping process.

According to the bead wrapping apparatus of the present invention, when a bead is surrounded by a wrapping material, the wrapping material can be initially attached automatically and an end of the wrapping material can be cut and attached automatically, making it possible to automate facilities and remarkably reduce a required amount of labor.

Although an exemplary embodiment of the present invention has been described for illustrative purposes, those skilled in the art will appreciate that various modifications, additions and substitutions are possible, without departing from the scope of the invention as disclosed in the accompanying claims.

## Claims

1. A bead wrapping apparatus comprising:
a winder (1) on which a wrapping material (101) is wound;
a plurality of pulling rolls (3) connected to a motor (2) pulling the wrapping material (101) wound on the winder (1); and
an advancer (6) for guiding and moving in the looped condition the wrapping material (101) pulled by the pulling rolls (3) in a looped condition to a bead wrapping part (5),
the advancer (6) including a clamp (13) for clamping the wrapping material (101) from the pulling rolls (3), a clamp cylinder (14) for operating the clamp (13), and an air cylinder (8) for moving the clamp (13); and
a bead wrapping part including:
a bead rotating unit (9) for rotating a bead (100) and including a bead driving motor (15) and a bead driving roll (16) to which a power of a bead driving motor (15) is transferred;
a wrapping material attaching unit (10) for surrounding the wrapping material (101) supplied from the advancer (6) on a circumference of the bead which is rotated by the bead rotating unit (9), the wrapping material attaching unit (10) including a press roll (18) mounted on a rotating bar (19) for attaching the wrapping material (101) to a circumference of the bead via a tensional force applied by a spring (20) to the rotating bar (19); and
upper and lower knives (7a,7b) operated by air cylinders (12) for cutting the wrapping material (101); and
a driving unit (11) including a driving gear (26) and a driven gear (27) driven by a motor for driving the wrapping material attaching unit (10), one side of the drives gear (27) being engaged with the driving gear (26) and the other side of the driven gear (27) being engaged with a wrapping gear (23).

2. The bead wrapping apparatus as claimed in claim 1, wherein the wrapping material attaching unit further comprises:
an air cylinder (21) for rotating the rotating bar (19) via a hinge shaft (22) within the wrapping gear (23) against the tensional force of the spring (20);
the wrapping gear (23) to which the rotating bar (19) is mounted by means of the hinge shaft (22) and for stacking the wrapping material (101) to be attached to the bead upon rotation; and
a plurality of storing rolls (24) mounted to a circumferential surface of the wrapping gear (23) at an equal angular interval for stacking the wrapping material (101) on an outer race of each storing roll (24).

## Patentansprüche

1. Wulsteinschlagvorrichtung, beinhaltend:
einen Wickler (1), auf dem ein Einschlagmaterial (101) gewickelt ist;
eine Vielzahl von Zugrollen (3), die mit einem Motor (2) verbunden sind und das auf den Wickler (1) gewickelte Einschlagmaterial (101) ziehen; und
einen Vorschieber (6) zum Führen und Bewegen im geschlungenem Zustand des Einschlagmaterials (101), das von den Zugrollen (3) in einem geschlungenem Zustand gezogen wird, zu einem Wulsteinschlagteil (5),
wobei der Vorschieber (6) einen Festspanner (13) zum Festspannen des Einschlagmaterials (101) von den Zugrollen (3), einen Spannzylinder (14) zum Betätigen des Festspanners (13) und einen Luftzylinder (8) zum Bewegen des Festspanners (13) umfasst; und
einen Wulsteinschlagteil, umfassend:
eine Wulstrotiereinheit (9) zum Rotieren eines Wulsts (100) und umfassend einen Wulstantriebsmotor (15) und eine Wulstantriebsrolle (16), auf die eine Leistung eines Wulstantriebsmotors (15) übertragen wird;
eine Einschlagmaterialanbringungseinheit (10) zum Umschließen des Einschlagmaterials (101), das vom Vorschieber (6) geliefert wird, auf einem Umfang des Wulsts, der von der Wulstrotiereinheit (9) rotiert wird, wobei die Einschlagmaterialanbringungseinheit (10) eine Pressrolle (18) umfasst, die auf einer Rotierstange (19) montiert ist, zum Anbringen des Einschlagmaterials (101) auf einem Umfang des Wulsts über eine Spannkraft, die von einer Feder (20) auf die Rotierstange (19) ausgeübt wird; und
ein oberes und unteres Messer (7a, 7b), die von Luftzylindern (12) betätigt werden, zum Schneiden des Einschlagmaterials (101); und
eine Antriebseinheit (11), die ein treibendes Rad (26) und ein getriebenes Rad (27) umfasst, die von einem Motor getrieben wird, zum Treiben der Einschlagmaterialanbringungseinheit (10), wobei eine Seite des getriebenen Rads (27) mit dem treibenden Rad (26) im Eingriff ist und die andere Seite des getriebenen Rads (27) mit einem Einschlagrad (23) im Eingriff ist.

2. Wulsteinschlagvorrichtung gemäß Anspruch 1, wobei die Einschlagmaterialanbringungseinheit ferner Folgendes beinhaltet:
einen Luftzylinder (21) zum Rotieren der Rotierstange (19) über eine Gelenkwelle (22) innerhalb des Einschlagrads (23) gegen die Spannkraft der Feder (20);
das Einschlagrad (23), an dem die Rotierstange (19) mittels der Gelenkwelle (22) montiert ist, und zum Stapeln des Einschlagmaterials (101), das bei Rotation am Wulst anzubringen ist; und
eine Vielzahl von Speicherrollen (24), die auf einer umfänglichen Oberfläche des Einschlagrads (23) in einem gleichen Winkelintervall montiert sind, zum Stapeln des Einschlagmaterials (101) auf einer äußeren Rille von jeder Speicherrolle (24).

## Revendications

1. Dispositif de recouvrement de talons comprenant :
un enrouleur (1) sur lequel un matériau de recouvrement (101) est enroulé ;
une pluralité de rouleaux de traction (3) raccordés à un moteur (2) tirant le matériau de recouvrement (101) enroulé autour de l'enrouleur (1) ; et
un dispositif d'avancement (6) pour le guidage et le déplacement à l'état en boucle du matériau de recouvrement (101) tiré par les rouleaux de traction (3) dans un état en boucle jusqu'à une partie recouvrement de talon (5),
ledit dispositif d'avancement (6) comprenant un dispositif de serrage (13) pour serrer le matériau de recouvrement (101) provenant des rouleaux de traction (3), un vérin de serrage (14) pour actionner le dispositif de serrage (13), et un vérin pneumatique (8) pour déplacer le dispositif de serrage (13) ; et
une partie recouvrement de talon comprenant :
une unité de rotation de talon (9) pour faire tourner un talon (100) et comprenant un moteur d'entraînement de talon (15) et un rouleau d'entraînement de talon (16) auquel la puissance du moteur d'entraînement de talon (15) est transférée ;
un unité de fixation de matériau de recouvrement (10) destinée à entourer la circonférence du talon, entraîné en rotation par l'unité de rotation de talon (9), de matériau de recouvrement (101) fourni par le dispositif d'avancement (6), ladite unité de fixation de matériau de recouvrement (10) comprenant un rouleau de presse (18) monté sur une barre tournante (19) pour fixer le matériau de recouvrement (101) sur la circonférence du talon par l'intermédiaire d'une force de tension appliquée par un ressort (20) à la barre tournante (19) ; et
des couteaux supérieur et inférieur (7a, 7b) actionnés par des vérins pneumatiques (12) pour sectionner le matériau de recouvrement (101) ; et
une unité d'entraînement (11) comprenant un engrenage d'entraînement (26) et un engrenage entraîné (27) entraînés par un moteur pour l'entraînement de l'unité de fixation de matériau de recouvrement (10), un côté de l'engrenage entraîné (27) étant en prise avec l'engrenage d'entraînement (26) et l'autre côté de l'engrenage entraîné (27) étant en prise avec l'engrenage de recouvrement (23).

2. Dispositif de recouvrement de talons selon la revendication 1, ladite unité de fixation de matériau de recouvrement comprenant en outre :
un vérin pneumatique (21) pour faire tourner la barre tournante (19) par l'intermédiaire d'un arbre d'articulation (22) à l'intérieur de l'engrenage de recouvrement (23) contre la force de tension du ressort (20) ;
l'engrenage de recouvrement (23) auquel la barre tournante (19) est fixée au moyen de l'arbre d'articulation (22) et destiné à la superposition du matériau de recouvrement (101) à fixer au talon au cours de la rotation ; et
une pluralité de rouleaux de stockage (24) montés sur une surface circonférentielle de l'engrenage de recouvrement (23) à des intervalles angulaires égaux pour la superposition du matériau de recouvrement (101) sur le chemin extérieur de chaque rouleau de stockage (24).
